# EUROPEAN PATENT APPLICATION

(11) **EP 4 656 500 A1**
(43) Date of publication of application: **03.12.2025**
(21) Application number: 24178455.2
(22) Date of filing: 28.05.2024
(51) Int. Cl.: B62D 25/14, B62D 29/00

(54) **LOWER DASH**

(71) Applicant: GF Casting Solutions AG, 8201 Schaffhausen (CH)
(72) Inventor: PHILIPP, Stephan, 78262 Gailingen (DE); KOHLBRENNER, Fabian, 79862 Hoechenschwand (DE); BENTZEN, Niclas, 40531 Göteborg (SE); VAN DER PUTTEN, Zef, 40531 Göteborg (SE); KARLSSON, Thomas, 40531 Göteborg (SE); APPELGREN, Mikael, 40531 Göteborg (SE)
(74) Representative: Fenner, Seraina

(57) **Abstract**

Lower dash for a motor vehicle, the lower dash being configures to extend in y-direction transversely to the direction of travel for the motor vehicle and being configured to separate a passenger compartment and a front compartment of the motor vehicle, wherein the lower dash comprises, a partial bulkhead, an inner partial A-pillar arranged laterally with respect to the patrial bulkhead and a side member front including a connector to the sill and longitudinal rail, each on the left and right sides in the vehicle direction, wherein, the inner partial A-pillar, the partial bulkhead and the side member front arranged on the left side are designed as a one-piece part-lower dash made of die-cast light metal and the inner partial A-pillar, the partial bulkhead and side member front on the right side are designed as a one-piece part-lower dash made of die-cast light metal, wherein the part-lower dash arranged on the left-hand and right-hand sides being connected to one another via a joining.

## Description

The invention relates to a Lower dash for a motor vehicle, the lower dash being configures to extend in y-direction transversely to the direction of travel for the motor vehicle x and being configured to separate a passenger compartment and a front compartment of the motor vehicle, wherein the lower dash comprises, a partial bulkhead, an inner partial A-pillar arranged laterally with respect to the patrial bulkhead and a side member front including a connector to the sill and longitudinal rail, each on the left and right sides in the vehicle direction.

DE 10 2008 062 007 A1 discloses a bulkhead which is of multi-part design, namely comprising a lower crossmember, a bulkhead element and an upper reinforcing member, wherein the lower crossmember is designed as a light-metal die-cast component, and the bulkhead element and also the upper reinforcing member are formed from a light-metal sheet. The elements are connected to one another, e.g. by welding, screwing, adhesive bonding or clinching.

The disadvantage here is the high outlay for connecting the individual parts to one another.

DE 10 2008 062 004 A1 discloses a body structure in which the bulkhead has a flange and is connected to the crossmember, which likewise has a flange. In this case, the bulkhead is formed from a light-metal sheet and is preferably welded or adhesively bonded to the crossmember. Here too, there is the disadvantage of the high expenditure of time in bringing the individual elements together before the structural body part can be installed in the vehicle body.

It is an object of the invention to propose a lower dash and a method associated therewith which shortens the production time, reduces logistics expenses and requires as few manual working steps as possible, the intention being thereby to increase the economic efficiency of the lower dash, and also that the lower dash is as light as possible and yet has a high degree of stiffness. The very stiffness of the lower dash is necessary to absorb the same energy in the event of a center pole crash as a steel construction known from the state of the art, but with a significantly lower weight.

This object is achieved according to the invention in that the inner partial A-pillar, the partial bulkhead and the side member front arranged on the left side are designed as a one-piece part-lower dash made of die-cast light metal preferably high pressure die-cast and the inner partial A-pillar, the partial bulkhead and side member front on the right side are designed as a one-piece part-lower dash made of die-cast light metal, wherein the part-lower dash arranged on the left-hand and right-hand sides being connected to one another via a joining.

The inventive lower dash for a motor vehicle being configures to extend in y-direction transversely to the direction of travel for the motor vehicle x and being configured to separate a passenger compartment and a front compartment of the motor vehicle. The lower dash comprises, a partial bulkhead, an inner partial A-pillar arranged laterally with respect to the patrial bulkhead and a side member front including a connector to the sill and longitudinal rail, each on the left and right sides in the vehicle direction. It is advantageous if the partial A-pillar arranged laterally to the partial bulkhead is arranged on the side facing the outside of the vehicle in the y-direction. The inner partial A-pillar, the partial bulkhead and the side member front arranged on the left side are designed as a one-piece part-lower dash made of die-cast light metal and the inner partial A-pillar, the partial bulkhead and side member front on the right side are designed as a one-piece part-lower dash made of die-cast light metal. In other words, the lower dah consists of two separately manufactured die-cast parts, one of which forms the right-hand side and the other the left-hand side. Each of the two part-lower dashes contains the components listed, which are integrally molded on respectively which are molded in one piece. The part-lower dash arranged on the left-hand and right-hand sides being connected to one another via a joining technology. It is advantageous if the part-lower dashes can be moved towards each other along the joining. This allows a certain tolerance compensation to take place and the lower dash is easier to install in the chassis. In addition the part-lower dashes can be manufactured more easily and shipped in a more space-saving manner before assembly.

Preferably, between the two partial bulkheads is a joining region arranged. It is advantageous, if the joining region extends along the edge of the partial bulkheads that faces the center of the vehicle.

Preferably, the joining is built by a mutual overlap of the two partial bulkheads. It is advantageous if there is a strip at the edge of the partial bulkhead that extends along the partial bulkhead and serves as a joining strip. The two joining strips then lie on top of each other for joining. The mutual overlap can also be achieved by lugs that are arranged on at least one partial bulkhead and overlap the other one. This overlap enables tolerance compensation via the joining. In this way, the width of the lower dash that extends along the y-direction can be precisely adjusted. The overlaps are preferably screwed together, although another joining technique is also possible.

As previously mentioned, it is advantageous if the joining formed by screwing of the two partial bulkheads together. Of course, joining methods such as gluing, welding, riveting or others are also conceivable.

Preferably, the joining runs in the middle of the lower dash in respect to the y-direction, which ensures symmetrical loading and good accessibility to the joining region.

Preferably, the joining runs offset to the middle of the lower dash in respect to the y-direction. As the load on the lower dahs is highest in the middle, it is advantageous if the joining is not located in the middle but offset to it, where the load is lower.

It is advantageous if the part-lower dash is of thin-walled design, the component wall being is between 1 and 8 mm, preferably between 2 and 5 mm. Preferably, the component walls have different thicknesses according to their positioning on the part-lower dash. Due to the different thicknesses of the component walls, the flow behavior during the high pressure die-casting filling process in the part-lower dash is optimized or a filling optimization is achieved. On the one hand, the individual component walls can have different thicknesses according to their arrangement, on the other hand, a component wall itself can also have different thicknesses, i.e. it can taper or widen in order to achieve filling optimization as mentioned above.

Preferably, connecting elements for connecting a battery housing are arranged on the partial bulkheads. Preferably, corresponding connection elements such as screw-on points are arranged in the light metal die-cast component to attach a battery housing to the lower dash by joining.

It is advantageous if connecting elements for connecting a chassis subframe are arranged on the partial bulkheads. Preferably, corresponding connection elements such as screw-on points are arranged in the die-cast light metal component to attach a chassis subframe to the lower dash by joining. Of course, other and additional connection points can also be integrated into the lower dash respectively the partial bulkhead, depending on the vehicle type.

Preferably, the partial bulkhead has a ribbing for reinforcement. Preferably, the ribbing is arranged on one sides of the partial bulkhead, i.e. in the direction of the passenger compartment or in the direction of the front compartment. Preferably, the ribs extend at regular or irregular intervals across the entire width of the partial bulkhead respectively in the y-direction.

It is advantageous if, the side member front has a ribbing for reinforcement. Preferably, the ribbing on the side member front is directed outwards and there is no ribbing towards the center of the vehicle.

Preferably, the lower dash is made of an Al- or Mg-alloy.

This object is achieved according to the invention in that two one-piece part-lower dashes are produced by die casting and joined together to the lower dash. By producing the part-lower dashs according to the invention by die casting and then joining the two parts together, a complex, thin-walled and yet stable shape is possible.

It has been shown to be advantageous if the lower dash according to the invention is subjected to a heat treatment after casting and joining. This increases the desired properties, such as the elongation of the material of the lower dash. Heat treatment can be carried out in full or only partially.

All possible embodiments can be freely combined with one another and the method features also apply to the device and vice versa.

An exemplary embodiment of the invention is described by way of the Figures, the invention not being restricted to only the exemplary embodiment, in which:
Figure 1 shows a three-dimensional view of the invented lower dash when viewed from the passenger compartment,
Figure 2 shows a plan view of the invented lower dash when viewed from the passenger compartment,
Figure 3 shows a three-dimensional view of the two part-lower dashes before joining,
Figure 4 shows a side view of the inner partial A-pillar and the side member front of the invented lower dash,

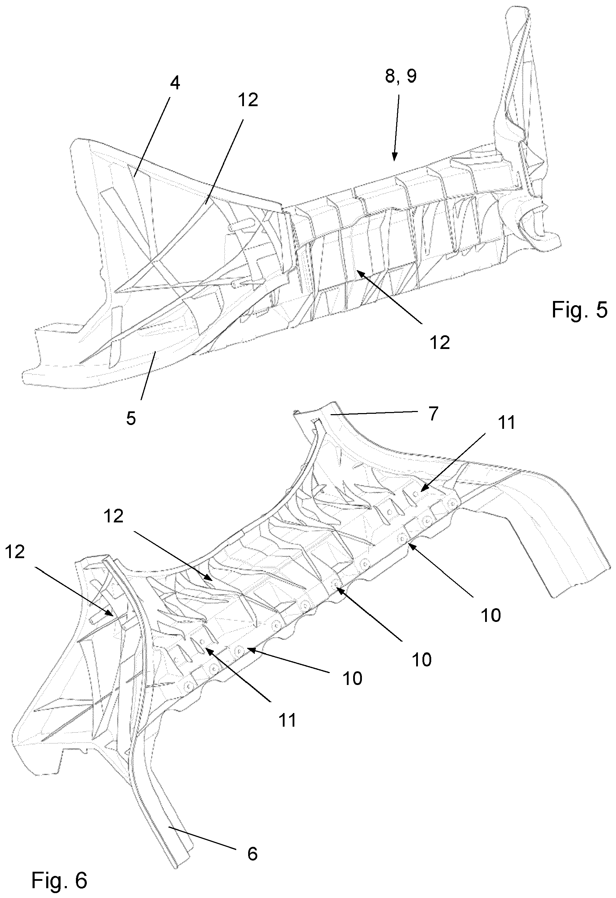

Figure 5 shows a three-dimensional view of the invented lower dash when viewed from the front compartment and
Figure 6 shows a three-dimensional view of the invented lower dash from the underside.

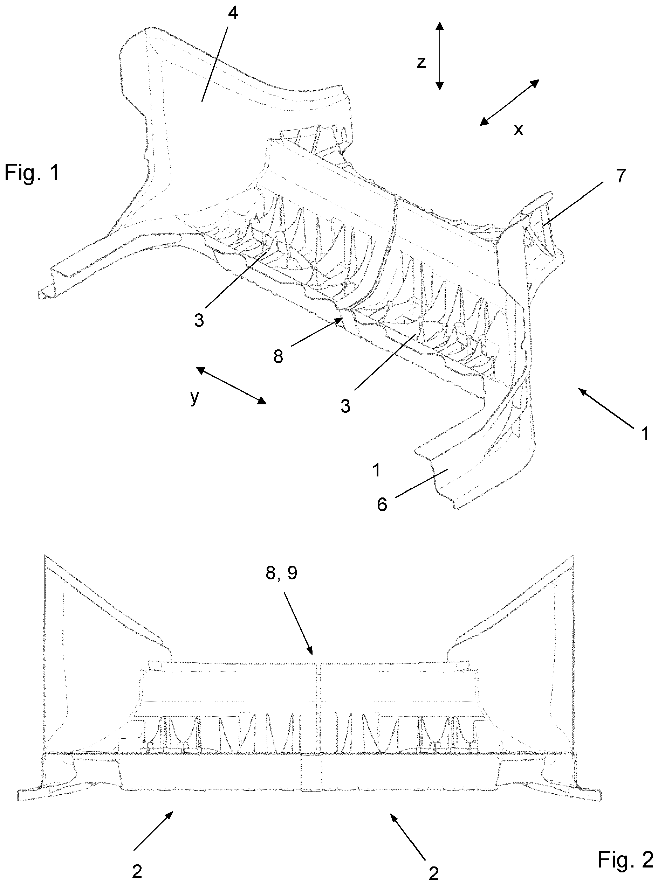

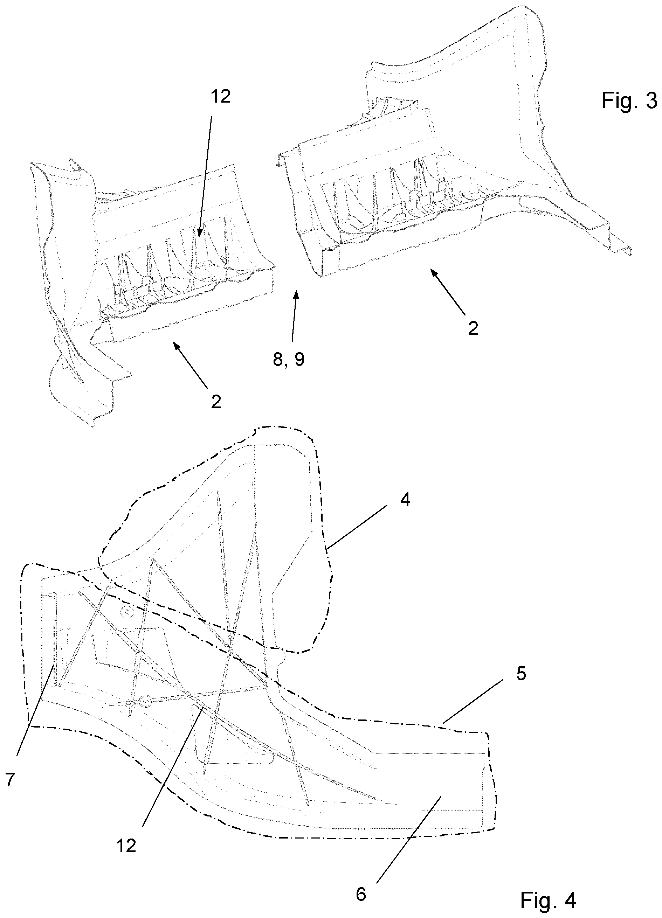

Figure 1 shows a three-dimensional view of the invented lower dash 1 for a motor vehicle. The lower dash 1 is configures to extend in y-direction transversely to the direction of travel for the motor vehicle x. The lower dash 1 is configured to separate a passenger compartment and a front compartment of the motor vehicle. The invented lower dash 1 comprises, a partial bulkhead 3, an inner partial A-pillar 4 arranged laterally with respect to the patrial bulkhead 3 and a side member front 5. The side member front 5 includes a connector to the sill 6 and to the longitudinal rail 7, this is clearly recognizable from fig. 4. The connectors are preferably designed as a C-shape so that they can accommodate the longitudinal rail as well as the sill and are joined with them. Clearly visible from fig. 4 is also the overlying partial A-pillar 4. The partial bulkhead 3, the inner partial A-pillar 4 arranged laterally with respect to the patrial bulkhead 3 and the side member front 5 are arranged on the invented lower dash 1 each on the left and right sides in the vehicle direction x.

The inner partial A-pillar 4, the partial bulkhead 3 and the side member front 5 arranged each on the left and right side, are designed as a one-piece part-lower dash 2 made of die-cast light metal. This means that the part-lower dash 2 is designed as a one-piece die-cast part to which the components inner partial A-pillar 4, the partial bulkhead 3 and the side member front 5 are integrally molded, i.e. they belong to a complete part-lower dash 2. Fig. 3 clearly shows that the two the part-lower dashes 2 are manufactured as two separately formed die-cast parts.

The two part-lower dashes 2 arranged on the left-hand and right-hand sides being connected to one another via a joining. It is advantageous if the joining area 8 is formed by a mutual overlap 9 of the partial bulkheads 3. Preferably, at least one partial bulkhead 3 along the side that projects into the center of the lower dash 1 respectively to the joining has a strip or lugs for joining that overlap 9 the other partial bulkhead 3 on the part-lower dash 2. It is advantageous if the joining is screwed together along the mutual overlap 9 (screws not shown). Fig. 3 shows that the joining 8 runs through the middle of the lower dash 1. This ensures good access for joining and guarantees a symmetrical stress distribution.

The ribbing 12 on the partial bulkhead 3 preferably extends over its entire width or over the width in the y-direction. The ribbing 12 is preferably arranged on the side facing the front compartment as well as on the side facing the passenger compartment. The ribbing 12 can be carried out at regular or irregular intervals.

The side member front 5 also has a ribbing 12 for stiffening. The ribbing 12 is preferably arranged on the outside of the side member front 12 and the side facing the center preferably has no ribbing. Of course, the course of the ribbing must be adapted to the vehicle to be developed in each case.

The connection elements 10, 11 for the battery housing and the chassis subframe can be seen on the underside. These are integrally molded onto the two part-lower dashes 2, which means that an additional work step can be avoided by joining a connecting element. Of course, further connecting elements can be molded directly onto the part-lower dashes 2 if the design of the vehicle permits this.

### Reference numbers

- 1: Lower dash
- 2: part-lower dash, right and left
- 3: partial bulkhead
- 4: inner partial A-pillar
- 5: side member front
- 6: connector to the sill
- 7: connector to longitudinal rail
- 8: joining region
- 9: overlap, strip
- 10: connecting elements for connecting a battery housing
- 11: connecting elements for connecting a chassis subframe
- 12: ripping

- x: x-direction
- y: y-direction
- z: z-direction

## Claims

1. Lower dash (1) for a motor vehicle, the lower dash (1) being configures to extend in y-direction (y) transversely to the direction of travel for the motor vehicle (x) and being configured to separate a passenger compartment and a front compartment of the motor vehicle, wherein the lower dash (1) comprises, a partial bulkhead (3), an inner partial A-pillar (4) arranged laterally with respect to the patrial bulkhead (3) and a side member front (5) including a connector to the sill (6) and longitudinal rail (7), each on the left and right sides in the vehicle direction, **characterized in that**, the inner partial A-pillar (4), the partial bulkhead (3) and the side member front (5) arranged on the left side are designed as a one-piece part-lower dash (2) made of die-cast light metal and the inner partial A-pillar (4), the partial bulkhead (3) and side member front (5) on the right side are designed as a one-piece part-lower dash (2) made of die-cast light metal, wherein the part-lower dash (2) arranged on the left-hand and right-hand sides being connected to one another via a joining.

2. Lower dash (1) according to claim 1, characterized to that, between the two partial bulkheads (3) is a joining (8) region arranged.

3. Lower dash (1) according to either of claims 1 or 2, characterized to that the joining region (8) is built by a mutual overlap (9) of the two partial bulkheads (3).

4. Lower dash (1) according to either of claims 2 or 3, characterized to that, the joining formed by screwing of the two partial bulkheads (3) together.

5. Lower dash (1) according to one of claims 2 to 4, characterized to that, the joining is formed by screwing the mutual overlap (9) of the two partial bulkheads (3) together.

6. Lower dash (1) according to one of claims 1 to 6, characterized to that, the joining runs in the middle of the lower dash (1) in respect to the y-direction.

7. Lower dash (1) according to one of claims 1 to 6, characterized to that, the joining runs offset to the middle of the lower dash (1) in respect to the y-direction.

8. Lower dash (1) according to one of claims 1 to 6, characterized to that, the part-lower dash (2) is of thin-walled design, the component wall being is between 1 and 8 mm, preferably between 2 and 5 mm.

9. Lower dash (1) according to one of claims 1 to 9, **characterized in that**, connecting elements (10) for connecting a battery housing are arranged on the partial bulkheads (3).

10. Lower dash (1) according to one of claims 1 to 10, **characterized in that**, connecting elements for connecting a chassis subframe are arranged on the partial bulkheads.

11. Lower dash (1) according to one of claims 1 to 11, **characterized in that**, the partial bulkhead has a ribbing for reinforcement.

12. Lower dash (1) according to one of claims 1 to 12, **characterized in that**, the side member front has a ribbing for reinforcement.

13. Lower dash (1) according to claim 1 to 13, **characterized in that** the lower dash (1) is made of an Al- or Mg-alloy.

14. Method for producing a lower dash (1) according to one of claims 1 to 13, **characterized in that**, two one-piece part-lower dashes (2), a left and a right one, are produced by high pressure die casting and joined together to the lower dash (1).
